# EUROPÄISCHE PATENTSCHRIFT

(11) **EP 1 144 895 B1**
(45) Veröffentlichungstag und Bekanntmachung des Hinweises auf die Patenterteilung: **13.10.2004**
(21) Anmeldenummer: 99938312.8
(22) Anmeldetag: 21.07.1999
(51) Int. Cl.: F16L 55/165, F16L 55/162, B26B 17/00

(54) **VERFAHREN ZUR SANIERUNG BZW. RENOVIERUNG VON ABWASSERLEITUNGEN UND -KANÄLEN**
METHOD FOR REDEVELOPING OR RENOVATING SEWER DRAINS AND SEWER DUCTS
PROCEDE POUR ASSAINIR ET RENOVER DES CONDUITES ET DES CANALISATION D'EAUX RESIDUAIRES

(30) Priorität: 28.07.1998 DE 19833885
(43) Veröffentlichungstag der Anmeldung: 17.10.2001
(73) Patentinhaber: Bürger, Joachim, Curracloe-Kilmacoe, County Wexford (IE)
(72) Erfinder: Bürger, Joachim, Curracloe-Kilmacoe, County Wexford (IE)
(74) Vertreter: Weisse, Jürgen, Dipl.-Phys.
(86) Internationale Anmeldenummer: PCT/EP1999/005213
(87) Internationale Veröffentlichungsnummer: WO 2000/006932

(56) Entgegenhaltungen:
- WO-A-97/01429
- DE-A- 3 603 009
- DE-A- 4 431 336
- US-A- 5 055 167

## Beschreibung

### Technisches Gebiet

Die Erfindung betrifft ein Verfahren zur Sanierung bzw. Renovation von Abwasserleitungen und -kanälen. Unter Sanierung oder Renovation versteht man dabei Maßnahmen zur Verbesserung der aktuellen Funktionsfähigkeit von Abwasserleitungen und -kanälen unter vollständiger oder teilweiser Einbeziehung ihrer ursprünglichen Substanz. Im folgenden wird von der Sanierung von Abwasserkanälen gesprochen, wobei sowohl die Sanierung als auch die Renovierung von sowohl Abwasserkanälen als auch Abwasserleitungen gemeint ist.

### Zugrundeliegender Stand der Technik

Abwasserkanäle müssen von Zeit zu Zeit saniert werden, da die Abwasserrohre Umwelteinflüssen ausgesetzt sind und mit der Zeit ihre Funktion nicht mehr erfüllen können, da sie z.B. undicht werden.

Beispielsweise müssen in Deutschland in nächster Zukunft Abwasserkanäle von einer Länge von mehreren Hunderttausenden von Kilometern saniert werden. In Deutschland existieren ca. 1.400.000 km Abwasserkanäle. Ca. 750.000 km müssen saniert werden. Laut Hochrechnungen müssen hierfür bis zu 150 Milliarden Mark in den nächsten Jahren aufgewendet werden.

Heutzutage werden Kunststoffrohre (z.B. aus Polypropylen) zur Sanierung von Abwasserkanälen eingesetzt. Dabei werden verschiedene Auskleidungsverfahren angewendet. Eine Verfahrensgruppe der Auskleidungsverfahren ist das sog. Rohrrelining, wobei selbsttragende Kunststoffrohre abschnittsweise in die zu sanierenden Abwasserrohre eingebracht werden zur Wiederherstellung oder Erhöhung des Widerstandsvermögens gegen physikalische, chemische, biochemische und/oder biologische Angriffe Angriffe zur Verhinderung einer erneuten Bildung von Inkrustationen, zur Wiederherstellung und/oder Erhöhung der statischen Tragfähigkeit sowie der Wasserdichtheit. Dabei werden die Querschnittsabmessungen der zu sanierenden Abwasserrohre bzw. Einstiegsschächte reduziert.

Bei den Reliningverfahren unterscheidet man zwischen Rohrstrang-Relining, Langrohr-Relining und Kurzrohr-Relining. Beim Rohrstrang-Relining wird ein Kunststoffrohrstrang mit kreisförmigem Querschnitt in einem Arbeitsgang in den zu sanierenden Abschnitt des Abwasserrohres eingezogen. Dabei entsteht ein Ringraum zwischen dem Kunststoffrohrstrang als Innenrohr ("Inliner") und dem zu sanierenden Abwasserrohr. Dieser Ringraum wird mit einem Füllstoff verfüllt. Als Füllstoff werden z.B. Sande, fließfähige, hydraulisch abbindende Stoffe und schäumende Massen verwendet. Das Verfahren ist unabhängig von der Querschnittsform des Abwasserrohres. Im Regelfall werden Kreisquerschnitte im Nennwertbereich DN 80 - DN 2000 bei Längen bis maximal 700 m in Abhängigkeit vom Zustand der Trasse der Halterung saniert. Im Gegensatz zum Rohrstang-Relining werden beim Langrohr- und Kurzrohr-Relining selbsttragende Einzelrohre diskontinuierlich in die zu sanierenden Abwasserrohre eingebracht. Auch diese Verfahren sind weitgehend an die unterschiedlichen Querschnittsformen der Abwasserrohre anpaßbar. Das jeweils anzuwendende Sanierungsverfahren ist von den örtlichen Gegebenheiten abhängig.

Die Sanierung von Abwasserkanäle stellen mehrere Probleme dar. Einerseits ist es sehr kostenaufwendig und andererseits treten Umweltprobleme auf, da ökologische Schäden auftreten.

Ein weiteres Umweltproblem ist die Entsorgung von Altgummi, insbesondere von gebrauchten Fahrzeugreifen. In den letzen Jahren sind viele Anstrengungen unternommen worden, solche Altreifen zur Verhinderung einer Umweltverschmutzung wiederzuverwerten und die wertvolle Energiequelle zu nutzen.

Die rohstoffliche Verwertung von Altreifen konzentriert sich auf unterschiedliche Verfahren der Pyrolyse, Hydrierung und Vergasung. Die dabei anfallenden Produkte (Öle, Gase, Koks, Ruß etc.) müssen in der Regel vor ihrer Verwertung gereinigt werden und sind teuer. Die rohstoffliche Verwertung setzt zudem Schadstoffe frei bzw. muß mit kostenintensiven Verfahrensstufen zur Abwasser- bzw. Abgasreinigung gekoppelt werden.

Die energetische Verwertung von Altreifen beinhaltet gegenwärtig die geordnete Verbrennung von Altreifen in der Zementindustrie. Es bestehen jedoch bereits Kapazitätsengpässe. Weiterhin treten Stabilitätsprobleme im Produktionsprozeß der Zementherstellung bei hohen Zugaberaten auf.

Die Deponierung von Altreifen verliert zunehmend an Bedeutung, da die Deponiekosten ständig steigen. Weiterhin stellen die potentielle Brandgefahr, die spontane Pyrolyse und die Gefahr des Ungezieferbefalls Probleme dar.

Handlungsbedarf auf dem Gebiet der Altreifenentsorgung ergibt sich auch durch die immer häufiger auftretenden kriminellen Entsorger von Altreifen.

Zur Wiederverwendung von Altgummi, insbesondere von Altreifen sind mehrere Verfahren bekannt.

Durch die EP-PS 0 493 732 ist ein Verfahren zur Aufbereitung von schwefelhaltigem Altgummi bekannt. Der Gummi wird zu Gummimehl zerkleinert. Aus dem zerkleinerten Gummi wird dann Kautschukregenerat unter Devulkanisierung erzeugt. Der zerkleinerte Gummi wird in einer Bakteriensuspension von chemolithotrophen Mikroorganismen unter Luftzufuhr gehalten, bis der Schwefel als elementarer Schwefel und/oder Schwefelsäure partiell oder vollständig vom verbleibenden replastizierten Kautschukregenerat abgetrennt ist. Das so replastizierte Kautschukgenerat wird zu gewissen Gewichtsanteilen an der Protektormischung bei der Runderneuerung von Altreifen wiederverwendet.

Durch die DE-OS 44 31 336 sind Material-Zusammensetzungen bekannt, welche eine Mischung aus pulverisierten Altreifen, ein oder mehrere Harze und Chemikalien enthalten. Die Harze sind aus Polypropylenharz, Polyethylenharz niedriger Dichte und Polyethylenharz hoher Dichte ausgewählt. Die Chemikalien sind aus der Gruppe aus Aceton, kaustischem Soda, Glaswolle, Ammoniumphosphat, Stärke und Pigmenten ausgewählt. Zur Herstellung von Formprodukten aus diesen Material-Zusammensetzungen werden die Komponenten miteinander vermischt, die Mischung bei 230 bis 350°C verschmilzt und die Mischung durch ein Schleuer-, Extrudier- oder Preßformgebungsverfahren ausgeformt. Bei der Herstellung von Abwasserrohre nach diesem Verfahren enthält die Material-Zusammensetzung neben pulverisiertem Altreifen und Harze ebenfalls Aceton, Glaswolle, Ammoniumphosphat und/oder Stärke. Dabei dienen die Zusätze Aceton, Glaswolle, Ammoniumphosphat und/oder Stärke beispielsweise zum Verbessern der Eigenstabilität der Abwasserrohre.

Durch die DE-OS 44 33 961 ist ein Verfahren zur Herstellung von Formartikeln und Flächenwaren aus einer Recyclingmischung auf der Basis Gummimahlgut und Polyethylen bekannt. Dabei wird das Polyethylen aufgeschmolzen und geknetet. Das Gummimahlgut und gegebenenfalls Zusatzstoffe werden dazugegeben. Die Polyethylen-Mischung wird dann von einer Walze durchgearbeitet.

Durch die DE-OS 42 20 623 ist ein Verfahren zur Herstellung von feinkörnigem Gummipulver aus Altgummivulkanisaten bekannt, wobei das erzeugte Gummipulver im Verbund mit Recycling-Thermoplasten gleicher Mahlfeinheit zu einem neuen Rohstoff verarbeitet werden kann.

### Offenbarung der Erfindung

Der Erfindung liegt die Aufgabe zugrunde, ein günstiges Verfahren zur Sanierung von Abwasserkanälen zu schaffen.

Erfindungsgemäß wird diese Aufgabe gelöst durch
(a) Herstellen eines aus Altgummi und Kunststoff aufgebauten Rohres geringer Eigenstabilität, und
(b) Einbringen dieses Rohres in einem alten Abwasserrohr der Abwasserkanäle, wobei das Rohr geringer Eigenstabilität von der Wandung des alten Abwasserrohres gestützt werden.

Unter Rohre geringer Eigenstabilität werden dabei Rohre verstanden, welche nicht in der Lage sind die Beanspruchungen standzuhalten, welchen ein Abwasserrohr ausgesetzt sind. Solche Beanspruchungen sind insbesondere der vom Erdreich ausgeübte Druck.

Die Erfindung beruht auf der Erkenntnis, daß die Eigenstabilität von Rohren zur Sanierung von Abwasserkanälen nicht besonders groß sein muß, wenn sie in die alten, schon vorhandenen Abwasserrohre der Abwasserkanäle eingebracht werden. Dann können nämlich diese Rohre geringer Eigenstabilität von der Wandung der alten Abwasserrohre und von der Ringraumverfüllung gestützt werden.

Ein besonderer Vorteil des erfindungsgemäßen Verfahren liegt also darin, daß die Rohre ausschließlich aus Altgummi und Kunststoff hergestellt werden können. Da keine hohe Eigenstabilität erforderlich ist, kann nämlich auf üblicherweise verwendeten Zusatzstoffe zur Erhöhung der Eigenstabilität verzichtet werden.

Durch das erfindungsgemäße Verfahren können die Kosten der Sanierung von Abwasserkanälen niedrig gehalten werden, da die Herstellungskosten für aus Altgummi und Kunststoff aufgebaute Rohre geringer sind als für die normalerweise verwendeten Rohre aus reinem Kunststoff (Polypropylen).

Der zum Herstellen des Rohres verwendete Kunststoff kann z.B. Polyethylen oder Polypropylen sein, wobei sowohl frischer als auch recycelter Kunststoff verwendet werden kann. Der zum Herstellen des Rohres verwendete Altgummi kann aus verschiedenen Altgummiquellen stammen. Es kann sich beispielsweise um funktionalisiertem EPDM ("Ethylen-Propylen-Dien-Terpolymer") handeln.

Vorzugsweise wird der zum Herstellen des Rohres verwendete Altgummi zu feinkörnigem Gummimehl mit einer Korngröße von <1 mm verarbeitet. Dadurch wird eine gute Mischbarkeit mit dem Kunststoff erzielt. Es können aber auch bestimmte Zusatzstoffe verwendet werden, durch welche die Mischbarkeit des Altgummis und des Kunststoffs verbessert wird. Solche Zusatzstoffe sind beispielsweise Gleitmittel wie kristalline Polypropylenwachse mit einem Molekulargewicht von ca. 2000.

Das Mischungsverhältnis von Altgummi und Kunststoff beim Herstellen des Rohres kann verschiedenartig gewählt werden. Es hat sich als besonders günstig erwiesen, wenn ca. 50 bis 70 Gew% Altgummi und ca. 30 bis 50 Gew.% Kunststoff verwendet wird.

Wie oben schon erwähnt, können Altreifen zum Herstellen des Rohres geringer Eigenstabilität verwendet werden. Durch das erfindungsgemäße Verfahren werden dann auch große Umweltprobleme gelöst, da eine sehr große Menge Altreifen verbraucht werden können. Das Altreifenaufkommen in Deutschland liegt jährlich bei ca. 600.000 Tonnen. Es kann gezeigt werden, daß alle anfallenden Altreifen während einem Zeitraum von schätzungsweise ca. 12 Jahren bei der Sanierung der Abwasserkanäle durch das erfindungsgemäße Verfahren verbraucht werden können. Diese Zahl erhält man, wenn angenommen wird, daß der Gummianteil (inklusive Ruß und Füllstoff) in Altreifen bei ca. 70% liegt. Dies ergibt ein jährliches Altgummiaufkommen von 420.000 Tonnen. Bei einer ungefährlichen Dichte des Altgummis von 0,93 g/cm³ errechnet sich daraus ein Volumen von 450.000 m³ Altgummi. Bei einem gemittelten Durchmesser eines Abwasserkanals von DN 500 (500 mm) ergibt sich einen Umfang von 1,57 m. Bei einem Sanierungsbedarf von 750.000 km Abwasserkanäle ergibt dies umgerechnet eine Fläche von ca. 1.200.000.000 m². Bei einer Schichtdicke (entsprechend der Wandstärke des Rohres) von 6 mm errechnet sich dann ein Volumen von 7.200.000 m³. Legt man nun zugrunde, daß 70% des verwendeten Materials aus Altgummi besteht, so ergibt dies ein mit Altgummi zu verfüllendes Volumen von 5.100.000 m³. Durch das erfindungsgemäße Verfahren ist damit also eine langfristige Lösung für die Beseitigung von Altreifen gegeben, wobei Folgekosten für die Entsorgung der Altreifen gespart werden.

Bei der Herstellung der bei dem erfindungsgemäßen Verfahren verwendeten Rohre aus Altreifen kann wie folgt vorgegangen werden:

Zunächst werden die Altreifen nach Gummiqualität sortiert, geschreddert, granuliert, gemahlen und von Fremdstoffen (Stahl, Nylongewebe usw.) befreit. Die Mahlung kann sowohl in Form einer Warmmahlung als auch als Kaltmahlung (kryogene Mahlung) vorgenommen werden. Diese einzelnen Prozeßstufen sind an sich bekannt.

Neben unbehandeltem Gummimahlgut kann auch wahlweise speziell vorbehandeltes Gummimahlgut verwendet werden. Dieses Gummimahlgut kann nach einem der bekannten Verfahren zur Herstellung von Gummimahlgut, beispielsweise nach dem in der EP-PS 0 493 732 beschriebenen Verfahren hergestellt werden. Das mit Hilfe dieses Verfahrens erzeugte oberflächenmodifizierte Altgummimehl ist in Verbindung mit Kunststoffen (z.B. Polypropylen oder Polyethylen) zur Herstellung von Kunststofferzeugnissen gut geeignet.

Das zur Herstellung der bei dem erfindungsgemäßen Verfahren verwendeten Rohre verwendete Kunststoffmaterial, z.B. Polypropylen wird dann ebenfalls nach einem der bekannten Verfahren mit dem Gummimahlgut vermischt, so daß eine Rohmasse entsteht.

Aus dieser Rohmasse werden nun Rohre oder Formteile durch Extrudier-, Schleuder- oder Press-Formgebungsverfahren mit gewünschtem Dicke, Größe und Querschnittsform hergestellt. Die Materialeigenschaften der so hergestellten Rohre werden über die Zusammensetzung der Rohmassen und über die Verarbeitungsparameter eingestellt. Solche Verfahren sind ebenfalls an sich bekannt.

Die bei dem erfindungsgemäßen Verfahren verwendeten Rohre geringer Eigenstabilität werden dann vorzugsweise nach einem der oben erwähnten Reliningverfahren in die alten Abwasserrohre hineingebracht.

Wenn dabei die äußeren Abmessungen des Rohres geringer Eigenstabilität kleiner als die inneren Abmessungen des alten Abwasserrohres sind, so daß ein Raum zwischen dem Rohr geringer Eigenstabilität und dem alten Abwasserrohr entsteht, dann kann der Verbrauch an Altgummi bei dem erfindungsgemäßen Verfahren noch erhöht werden, indem dieser Raum mit Altgummi oder einem Altgummi enthaltendes Material gefüllt wird.

Die Querschnittsform der verwendeten Rohre geringer Eigenstabilität kann beliebig sein. Vorteilhafterweise wird sie jedoch an die Querschnittsform des alten Abwasserrohres angepaßt und kann kreisförmig sein.

Ein Ausführungsbeispiel der Erfindung ist nachstehend näher erläutert.

### Bevorzugte Ausführung der Erfindung

In dem hier beschriebenen Ausführungsbeispiel zur Sanierung von Abwasserkanälen werden Altreifen verwendet. Die Altreifen werden nach einem der schon bekannten Verfahren zu unbehandeltem oder zu speziell vorbehandeltem Gummimahlgut verarbeitet. Bei einem bevorzugten Verfahren werden dabei die gesammelten Altreifen mechanisch zerkleinert und mit flüssigem Stickstoff auf eine Temperatur von unter -40°C (Erstarrungspunkt von Gummi) abgekühlt. In einer Mühle werden die Reifenteile zermalmt und in die Bestandteile Gummi, Textilien und Stahl zerlegt. Die bei der weiteren Zerkleinerung des Gummis zu wählende Partikelgröße beträgt ≤500 µm. Das Gummimehl wird anschließend suspendiert und in einem Bioreaktor bei gemäßigtem Temperaturen unter Luftzufuhr mikrobiell behandelt. Bei den Mikroorganismen handelt es sich um spezielle schwefeloxidierende Mikroorganismen. Durch diese erfolgt an der Partikeloberfläche eine Devulkanisation durch mikrochemische Spaltung der Polysulfidbrücken. Die Polymerketten selbst bleiben dabei unbeschädigt. Nach der biologischen Stufe erfolgt eine Trennung der Suspension durch Sedimentation und Filtration. Das abgetrennte Gummimehl wird schonend getrocknet und konfektioniert.

Das so funktionalisierte Gummimehl wird mit einem Polypropylen (z.B. PP Hostalten PPT 1070 EU, natur) in einem Doppelschneckenextruder compoundiert. Hierbei werden das Polypropylen gravimetrisch und das Gummimehl volumetrisch über eine Seitenbeschickung eingebracht. Die Schmelze tritt über einen Adapter (Hosenstück) in die Wasserringgranulierung ein. Der Granulator besitzt 12 Bohrungen mit einem Durchmesser von 3 mm und drei Messer. Die Massetemperatur liegt dabei zwischen 170°C und 250°C, vorzugsweise bei 200°C.

Aus dieser Rohmasse werden dann Rohre mit Hilfe eines Einschneckenextruders hergestellt. Der Schneckendurchmesser des Extruders beträgt 100 mm. Die Extrudertemperatur liegt dabei bei 200°C. Es wird mit einer Vakuumtankkalibrierung gearbeitet.

Die Herstellung eines Rohres kann auch in einem Arbeitsgang durchgeführt werden, wobei dann die Stufe der Compoundierung entfällt. Die Massetemperaturen liegen dabei in einem Bereich von 170°C bis 250°C. Die Anzahl der Schnecken des Extruders sowie alle anderen Parameter (z.B. Vakuum oder Schneckendurchmesser) können nach Bedarf frei gewählt werden.

Die so hergestellten Rohre werden nun nach einem der bekannten Reliningverfahren in die alten Abwasserrohre hineingebracht. Solche Verfahren sind an sich bekannt und werden daher hier nicht näher beschrieben.

## Patentansprüche

1. Verfahren zur Sanierung bzw. Renovation von Abwasserleitungen und -kanälen, **gekennzeichnet durch**
(a) Herstellen eines aus Altgummi und Kunststoff aufgebauten Rohres geringer Eigenstabilität, und
(b) Einbringen dieses Rohres in einem alten Abwasserrohr der Abwasserkanäle, wobei das Rohr geringer Eigenstabilität von der Wandung des alten Abwasserrohres gestützt werden.

2. Verfahren nach Anspruch 1, **dadurch gekennzeichnet, daß** die äußeren Abmessungen des Rohres kleiner als die inneren Abmessungen des alten Abwasserrohres sind, so daß ein Raum zwischen dem Rohr und dem alten Abwasserrohr entsteht, und daß dieser Raum mit einem Altgummi enthaltendes Material gefüllt wird.

3. Verfahren nach Anspruch 1 oder 2, **dadurch gekennzeichnet, daß** das zum Herstellen des Rohres verwendete Altgummi aus Altreifen oder funktionalisiertem EPDM gewonnen wird.

4. Verfahren nach einem der Ansprüche 1-3, **dadurch gekennzeichnet, daß** das zum Herstellen des Rohres verwendete Altgummi zu feinkörnigem Gummimehl mit einer Korngröße von <1 mm verarbeitet wird.

5. Verfahren nach einem der Ansprüche 1-4, **dadurch gekennzeichnet, daß** der zum Herstellen des Rohres verwendete Kunststoff Polypropylen ist.

6. Verfahren nach einem der Ansprüche 1-5, **dadurch gekennzeichnet, daß** das Mischungsverhältnis von Altgummi und Kunststoff beim Herstellen des Rohres so gewählt wird, daß 50 bis 70 Gew% Altgummi und 30 bis 50 Gew.% Kunststoff verwendet wird.

7. Verfahren nach einem der Ansprüche 1-6, **dadurch gekennzeichnet, daß** beim Herstellen des Rohres Zusatzstoffe zur Verbesserung der Mischbarkeit des Altgummis und des Kunststoffs verwendet werden.

## Claims

1. Method for refurbishing or renovating sewage pipes and channels **characterised by**
• manufacturing a pipe built up of used rubber or plastics and having a low inherent stability, and
• introducing this pipe into an old sewage pipe of the sewage channels, the tube of low inherent stability being supported by the wall of the old sewage pipe.

2. Method as set forth in claim 1, **characterised in that** the outer dimensions of the pipe are smaller than the inner dimensions of the old sewage pipe, such that a space is formed between the pipe and the old sewage pipe, and that this space is filled by a material containing used rubber.

3. Method as set forth in claim 1 or 2, **characterised in that** the used rubber employed for manufacturing the pipe is gained from used tires or functionalised EPDM.

4. Method as set forth in one of the claims 1-3, **characterised in that** the used rubber employed for manufacturing the pipe is processed to fine grained rubber granulate having a grain size of <1 mm.

5. Method as set forth in one of the claims 1-4, **characterised in that** the plastics used for manufacturing the pipe is polypropylene.

6. Method as set forth in one of the claims 1-5, **characterised in that** the mixing ratio of used rubber and plastics when manufacturing the tube is selected such that 50 to 70 percent by weigh of used rubber and 30 to 50 percent by weigh of plastics are employed.

7. Method as set forth in one of the claims 1-6, **characterised in that**, in manufacturing the pipe, additives are used for improving the mixing capacity of the used rubber and the plastics.

## Revendications

1. Procédé de réhabilitation et de rénovation de conduites d'eaux usées et de canalisations d'eaux usées, **caractérisé par**
(a) la fabrication d'un tube de faible stabilité propre réalisé à partir de caoutchouc usagé et de matière plastique, et
(b) l'introduction de ce tube dans un vieux conduit d'eaux usées des canalisations d'eaux usées, le tube de faible stabilité propre étant soutenu par la paroi du vieux conduit d'eaux usées.

2. Procédé selon la revendication 1, **caractérisé en ce que** les dimensions extérieures du tube sont inférieures aux dimensions intérieures du vieux conduit d'eaux usées de sorte qu'il se forme un espace entre le tube et le vieux conduit d'eaux usées, et que cet espace est rempli avec un matériau comprenant du caoutchouc usagé.

3. Procédé selon la revendication 1 ou 2, **caractérisé en ce que** le caoutchouc usagé utilisé pour la fabrication du tube provient de pneus usagés ou de EPDM fonctionnalisé.

4. Procédé selon l'une quelconque des revendications 1-3, c**aractérisé en ce que** le caoutchouc usagé utilisé pour la fabrication du tube est transformé en poudrette de caoutchouc à grain fin présentant une grosseur de grain de < 1 mm.

5. Procédé selon l'une quelconque des revendications 1-4, **caractérisé en ce que** la matière plastique utilisée pour la fabrication du tube est du polypropylène.

6. Procédé selon l'une quelconque des revendications 1-5, **caractérisé en ce que** les proportions du mélange de caoutchouc usagé et de matière plastique sont choisies pour la fabrication du tube de sorte à utiliser 50 à 70 % en poids de caoutchouc usagé et 30 à 50 % en poids de matière plastique.

7. Procédé selon l'une quelconque des revendications 1-6, **caractérisé en ce que** des additifs destinés à améliorer la miscibilité du caoutchouc usagé et de la matière plastique sont utilisés dans la fabrication du tube.
